# EUROPÄISCHE PATENTSCHRIFT

(11) **EP 1 733 188 B1**
(45) Veröffentlichungstag und Bekanntmachung des Hinweises auf die Patenterteilung: **27.08.2008**
(21) Anmeldenummer: 05715972.5
(22) Anmeldetag: 11.03.2005
(51) Int. Cl.: G01C 25/00, G01C 9/26

(54) **WASSERWAAGE**
SPIRIT LEVEL
NIVEAU BULLE

(30) Priorität: 12.03.2004 DE 102004012585; 27.04.2004 DE 202004006643 U
(43) Veröffentlichungstag der Anmeldung: 20.12.2006
(73) Patentinhaber: Stabila Messgeräte Gustav Ullrich GmbH, 76855 Annweiler (DE)
(72) Erfinder: STEFFENS, Markus, 67722 Winnweiler (DE); KALLABIS, Gabriel, 76848 Spirkelbach (DE)
(74) Vertreter: Stoffregen, Hans-Herbert
(86) Internationale Anmeldenummer: PCT/EP2005/002607
(87) Internationale Veröffentlichungsnummer: WO 2005/088256

(56) Entgegenhaltungen:
- DE-U1- 7 704 713

## Beschreibung

Die Erfindung bezieht sich auf eine Wasserwaage umfassend einen durch Spritzgießen thermoplastischen Materials hergestellten Wasserwaagenkörper aus Kunststoff mit zumindest einer Aussparung für einen Lagesensor wie Libelle.

Eine aus Kunststoff bestehende Wasserwaage ist aus dem AT-U- 006 006 bekannt. Um eine diesbezügliche Wasserwaage relativ lang auszubilden, ohne dass ein unzulässiger Verzug in Kauf zu nehmen ist, wird die Wasserwaage nach dem Gasinnendruckverfahren gespritzt.

Auch ist es bekannt, Wasserwaagen durch Schaumspritzgussverfahren herzustellen, um den Verzug zu minimieren. Nachteilig dieses Verfahrens ist es jedoch, dass eine mindere Oberflächenqualität gegeben ist, so dass grundsätzlich eine Nachbearbeitung erforderlich ist.

Aus der DE-U-77 04 713 ist eine Wasserwaage bekannt, deren Körper aus einem Kunststoffprofil besteht. In dem Kunststoffprofil erstrecken sich im Wesentlichen über die gesamte Länge des Wasserwaagenkörpers Metalleinlagen, die in das Kunststoffprofil eingegossen oder eingesetzt sind. Auch besteht die Möglichkeit, den Wasserwaagenkörper durch Extrudieren herzustellen, wobei die Metalleinlagen durch entsprechende Düsen in den Körper eingezogen werden. In einem weiteren Ausführungsbeispiel wird zum Ausbilden des Wasserwaagenkörpers ein Hohlkastenprofil benutzt, an dessen Innenseiten Ausnehmungen vorhanden sein können, in die Metalleinlagen einbringbar sind.

Die Metalleinlagen können beim Spritzgießen des Wasserwaagenkörpers mit eingegossen oder nach dem Spritzen des Wasserwaagenkörpers in vorgenannte Ausnehmungen eingeschoben werden.

Nach der DE-T-699 05 557 wird ein Wasserwaagenkörper durch Spritzgießen hergestellt. Um eine Libelle zu fixieren, wird diese von einem metallischen Rahmen aufgenommen, der in ein Spritzgießwerkzeug einsetzbar ist.

Ein Wasserwaagenkörper aus einem mit Glaspartikeln versetzten wärmeaushärtbaren Harz ist aus der DE-T-690 22 596 bekannt.

Aus der US-A-3,921,306 bzw. US-A-3,889,353 ist eine Wasserwaage bekannt, dessen Körper aus hochdichtem Urethanschaum hergestellt ist. Entlang der Arbeitsflächen der Wasserwaage bis zu deren Kanten hin erstrecken sich aus Metall bestehende Einlagen, die im Bereich der Arbeitsflächen im Schnitt eine Y-Geometrie aufweisen. Durch die Profilgeometrie und den Verlauf des Metallrahmens bedingt sind ausschließlich im Steg des Wasserwaagenkörpers Aussparungen zur Aufnahme von Libellen vorgesehen.

Der vorliegenden Erfindung liegt das Problem zu Grunde, eine Wasserwaage aus Kunststoff der eingangs genannten Art zur Verfügung zu stellen, die auch bei großen Längen eine hinreichende Steifigkeit und damit Maßgenauigkeit aufweist, ohne dass aufwendige Herstellungsverfahren erforderlich sind.

Zur Lösung des Problems sieht die Erfindung im Wesentlichen vor eine Wasserwaage umfassend einen durch Spritzgießen thermoplastischen Materials hergestellten Wasserwaagenkörper mit zumindest einer Aussparung für einen Lagesensor wie Libelle sowie einer von dem thermoplastischen Material zumindest bereichsweise umspritzten Verstärkungseinlage, die aus faserverstärktem Kunststoff besteht, wobei die Verstärkungseinlage des Weiteren zumindest bereichsweise innig bzw. stoffschlüssig mit dem Wasserwaagenkörper verbunden ist.

Dabei besteht die Verstärkungseinlage insbesondere aus einem glasfaser- oder kohlenstofffaserverstärkten Kunststoff. Insbesondere wird ein faserverstärkter Kunststoff für die Verstärkungseinlage benutzt, der über die gesamte Länge der Einlage oder Abschnitte dieser verlaufende ununterbrochene Fasern aufweist. So können Rovings oder textile Halbzeuge wie Gewebe oder Gelege benutzt werden, die in einer Kunststoffmatrix eingebettet sind.

Der Wasserwaagenkörper selbst besteht ebenfalls bevorzugterweise aus glasfaser- oder kohlenstofffaserverstärktem Kunststoff, wobei es sich bei den Fasern auch um Langfasern z.B. einer Länge von bis zu 10 mm handeln kann.

Unabhängig hiervon ist insbesondere vorgesehen, dass der Wasserwaagenkörper und die Verstärkungseinlage die gleiche Matrix aufweisen, die z. B. aus Polyamid besteht oder dieses enthält.

Die Verstärkungseinlage sollte ein E-Modul mit E » 70 GPa, insbesondere E > 200 GPa, vorzugsweise E > 400 GPa aufweisen.

Aufgrund der erfindungsgemäßen Lehre wird eine Kunststoffwasserwaage zur Verfügung gestellt, die bisher übliche Längen bei weitem überschreiten kann, ohne dass in Bezug auf die Messgenauigkeit Einbußen hingenommen werden müssen. Ursächlich hierfür ist die Verstärkungseinlage, die sich in Längsrichtung des Wasserwaagenkörpers, insbesondere im oberen oder unteren Längsrandbereich und über die gesamte Länge erstreckt. Dabei ist die zumindest eine Verstärkungseinlage derart geometrisch ausgebildet, dass in üblicher Weise von der der Messsohle gegenüber liegender Schmalseite des Wasserwaagenkörpers eine Aussparung ausgeht, in die eine Libelle einsetzbar ist. Auch in der Messsohle selbst kann eine entsprechende Aussparung vorgesehen sein.

Erfingdungsgemäß wird eine Kunststoffwasserwaage zur Verfügung gestellt, die vergleichbare Festigkeitswerte wie Aluminium-Druckguss-Wasserwaagen aufweist, ohne dass es einer mechanischen Nachbearbeitung und Beschichtung des Wasserwaagenkörpers bedarf.

Bevorzugterweise handelt es sich bei der Verstärkungseinlage um ein Profilelement wie U- oder T- oder E-Profil. Aber auch ein Rechteckprofil kommt in Frage, um nur beispielhaft Profilgeometrien zu nennen.

Um auch im Bereich der den Lagesensor aufnehmenden Aussparung dem Wasserwaagenkörper eine hinreichende Steifigkeit zu verleihen, ist in Weiterbildung der Erfindung vorgesehen, dass in Längsrichtung des Wasserwaagenkörpers betrachtet vor und hinter der von der der Messsohle gegenüber liegenden Schmalseite des Wasserwaagenkörpers und/oder von der Messsohle ausgehenden Aussparung eine erste und eine zweite Verstärkungseinlage verlaufen. In Weiterbildung können ober- und/oder unterhalb und zu beiden Seiten der Aussparung oder Ausnehmung eine dritte und eine vierte Verstärkungseinlage wie -leiste von dem thermoplastischen Material umspritzt sein, wobei gegebenenfalls die dritte und die vierte Verstärkungseinlage mit der ersten und der zweiten Verstärkungseinlage verbunden wie verschweißt sind. Auch besteht die Möglichkeit, zumindest in einem Längsbereich, vorzugsweise in beiden Längsbereichen des Wasserwaagenkörpers und entlang der Seiten der Aussparung erste und zweite Verstärkungsleisten anzuordnen. Bei zwei Verstärkungsleisten sollten diese über quer zu diesen verlaufende weitere Verstärkungsleisten verbunden sein.

Bevorzugterweise weist der Wasserwaagenkörper die Geometrie eines I-Profils mit oberem und unterem Flansch auf, wobei zumindest in einem, vorzugsweise in jeweiligem Flansch und in dessen Längsrichtung verlaufend eine Verstärkungseinlage angeordnet ist, die eine Profilgeometrie wie die eines T aufweisen kann. Dabei kann der Mittelschenkel des T-Profils entlang dem die Flansche des I-Profils vermindernden Stegs verlaufen.

Insbesondere ist vorgesehen, dass sich die Verstärkungseinlage entlang Längsachse des Wasserwaagenkörpers und über dessen gesamte oder nahezu gesamte Länge insbesondere entlang oberem und/oder unterem Längsrandbereich erstreckt, der außenseitig von der Messsohle bzw. dieser gegenüberliegenden Schmalseite des Wasserwaagenkörpers begrenzt ist, wobei - in Längsrichtung des Wasserwaagenkörpers betrachtet - vor und hinter der von der Schmalseite ausgehenden Aussparung für den Lagesensor jeweils eine erste Verstärkungseinlage vorzugsweise in Form eines T-Profils in den Wasserwaagenkörper eingespritzt ist und die erste Verstärkungseinlage mit zumindest einer seitlich der Aussparung und/oder unterhalb der Aussparung verlaufenden zweiten Verstärkungseinlage verbunden ist

Insbesondere sind die ersten Verstärkungseinlagen über eine unterhalb einer nach oben versetzten, also in Richtung der außen liegenden Schmalseite versetzten Libelle verlaufenden zweiten Verstärkungseinlage verbunden. Durch diese Maßnahmen erhält der Wasserwaagenkörper eine hohe Verbindungssteifigkeit, ohne dass in Bezug auf die Anordnung der Libellen im Vergleich zu bekannten aus Metall bestehenden Wasserwaagenkörper nutzungsmäßige Veränderungen erfolgen müssen.

Des Weiteren sollte die Wasserwaage in Bezug auf die Anordnung der Verstärkungseinlagen symmetrisch aufgebaut sein.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine perspektivische Darstellung eines Wasserwaagenkörper mit zugeordneter Verstärkungseinlage in Explosionsdarstellung,
- Fig. 2 - 6: Querschnitte von Verstärkungseinlagen im Bereich eines Flanschs einer Wasserwaage,
- Fig. 7 - 10: Abschnitte von Verstärkungseinlagen im Bereich einer Aussparung einer Wasserwaage und im Längsschnitt,
- Fig. 11: eine perspektivische Darstellung eines Abschnitts einer weiteren Ausführungsform einer Verstärkungseinlage,
- Fig. 12: die Verstärkungseinlage gemäß Fig. 11 in anderer Darstellung, und
- Fig. 13: einen Schnitt durch eine Wasserwaage mit einem Wasserwaagenkörper gemäß Fig. 1.

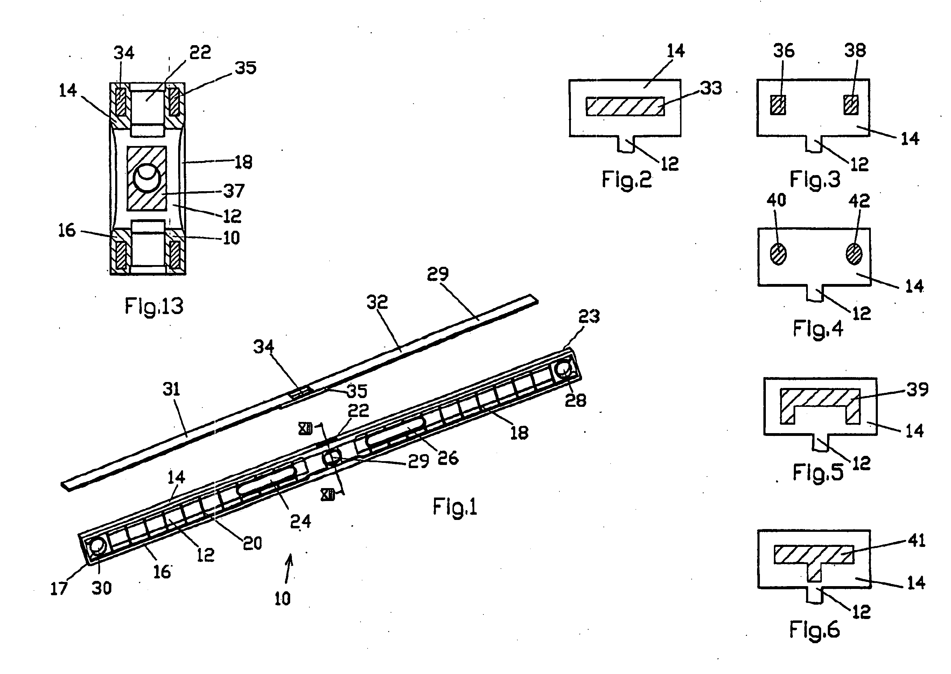

In Fig. 1 ist ein Körper 10 einer Wasserwaage dargestellt, der durch Spritzgießen thermoplastischen Materials hergestellt ist, das durch Glas- oder Kohlenstofffasern verstärkt ist. Bevorzugterweise wird als Kunststoff Polyamid als Matrix verwendet, in der Kurzfasern oder Langfasern z.B. bis zu einer Länge von 10 mm eingebettet sind. Um die zu verarbeitende Kunststoffmenge zu reduzieren, weist der Körper 10 eine I- oder DoppelT-Profilgeometrie mit Steg 12 und von dessen Enden und senkrecht zu diesem verlaufenden Flanschen 14, 16 auf. Entlang des Stegs 12 können des Weiteren zwischen den Flanschen 14, 16 verlaufende Verstärkungsrippen 18, 20 ausgebildet sein. Ferner ist im oberen Flansch 14 eine Aussparung 22 vorgesehen, in der eine Libelle einsetzbar bzw. über die eine Libelle optisch erfassbar ist. Die Aussparung 22 geht folglich von der Außenfläche 23 der oberen Schmalseite des Wasserwaagenkörpers 10 aus, die der Messsohle 17 gegenüberliegt. Die Messsohle 17 ist Außenfläche des unteren Stegs 12. Im Steg 12 sind ferner als Griffe dienende Aussparungen 24, 26 sowie ebenfalls Libellen aufnehmende Aussparungen 28, 29, 30 ausgebildet. Insoweit wird jedoch auf übliche Wasserwaagen-Konstruktionen verwiesen.

Alternativ kann der Steg 12 auch eine Wellengeometrie aufweisen, um bei gleicher Wandstärke eine höhere Verwindungssteifigkeit zu erzielen. Die Wellengeometrie ergibt sich in einem Schnitt parallel zu den Flanschen 14, 16. Im Falle eines wellenförmig verlaufenden Stegs bedarf es sodann der Rippen 18, 20 grundsätzlich nicht mehr.

Auch kann von der Messsohle 17 eine der Aussparung 22 entsprechende Aussparung ausgehen, um eine Libelle einzusetzen bzw. optisch erfassen zu können.

Um den Wasserwaagenkörper 10 in großer Länge wie z. B. 600 mm bis 2000 mm spritzen zu können, ohne dass insbesondere in der Abkühlphase ein unzulässig starker Verzug auftritt, ist erfindungsgemäß vorgesehen, dass der Wasserwaagenkörper 10 eine oder mehrere Verstärkungseinlagen aufweist, die von dem thermoplastischen Material zumindest bereichsweise, vorzugsweise jedoch vollständig umspritzt sind.

Gleichzeitig erhöhen die Einlagen dauerhaft die Steifigkeit des Wasserwaagenkörpers 10. Die Verstärkungseinlage besteht dabei aus faserverstärktem Kunststoff, insbesondere aus Polyamid, das die Matrix für die Fasern ist. Als Fasern werden insbesondere solche benutzt, die sich über die gesamte Länge der Verstärkungseinlage bzw. den jeweiligen Abschnitten, die zu der Verstärkungseinlage verbunden werden, erstrecken. So können die Fasern in Form von Rovings oder textilen Halbzeugen wie Gewebe oder Gelege in der Matrix vorliegen.

Unabhängig hiervon erfolgt beim Umspritzen der Verstärkungseinlage durch das faserverstärkte Kunststoffmaterial des Wasserwaagenkörpers 10 eine stoffschlüssige Verbindung zwischen dem Wasserwaagenkörper und der Verstärkungseinlage. Dabei ist bevorzugterweise vorgesehen, dass die Matrix des Wasserwaagenkörpers 10 mit der der Verstärkungseinlage übereinstimmt. Die Erfindung wird jedoch nicht verlassen, wenn der die Matrix bildende Kunststoff des Wasserwaagenkörpers 10 nicht mit dem der Verstärkungseinlage übereinstimmt.

Rein beispielhaft ist in Fig. 1 in Explosionsdarstellung eine entsprechende sich entlang des Körpers 10 erstreckende und im oberen Flansch 14 zu umspritzende Verstärkungseinlage 32 dargestellt. Wie die zeichnerische Darstellung der Fig. 1 verdeutlicht, besteht die Verstärkungseinlage 32 in eigentlichem Sinne aus vier Abschnitten, nämlich den parallel zu und in dem Flansch 14 verlaufenden flachen Abschnitten 29 und 31 sowie den kürzeren flachen Abschnitten 34, 35, die die Abschnitte 29, 31 im Bereich der Aussparung 22 verbinden, so dass in Folge dessen die Aussparung 22 frei zugänglich und entsprechend eine Libelle optisch erfassbar ist.

Die Verstärkungseinlage 32, die - wie anhand der nachfolgenden Figuren erläutert wird - kann auch andere Geometrien aufweisen. Unabhängig hiervon sollte sich die Einlage über die gesamte Länge des Wasserwaagenkörpers 10 erstrecken, wie gleichfalls aus der Fig. 1 ersichtlich wird. Ist in Fig. 1 die Verstärkungseinlage 32 nur im Bereich des oberen Flansches 14 dargestellt, so besteht ohne Weiteres auch die Möglichkeit im Bereich des unteren Flansches 16 eine entsprechende Einlage in dem Wasserwaagenkörper 10 einzubringen, also die Einlage zu umspritzen.

Verschiedene Ausführungsformen von Verstärkungseinlagen sind den nachfolgend beschriebenen Figuren zu entnehmen, wobei in den Fig. 2 bis 6 Einlagen dargestellt sind, die im Bereich des oberen Flansches 14 verlaufen, von dem der Steg 12 des Wasserwaagenkörpers 10 ausgeht.

Eine Verstärkungseinlage 33 kann entsprechend der Fig. 2 eine Rechteckgeometrie aufweisen. Eine Verstärkungseinlage kann aber auch die Form eines U-Profils 39 (Fig. 5) oder eines T-Profils 41 (Fig. 6) besitzen.

Es besteht gleichfalls die Möglichkeit, zwei gesonderte im Schnitt rechteckige oder o-valförmige Profilelemente 36, 38 bzw. 40, 42 als Verstärkungseinlagen zu benutzen, die insbesondere in dem unteren Flansch 16, gegebenenfalls auch in dem oberen Flansch 14 umspritzt werden. Bodenseite bzw. -fläche des unteren Flansches 16 ist im Ausführungsbeispiel die Messsohle 17 der Wasserwaage.

Der Abstand zwischen den parallel zueinander verlaufenden die Verstärkungseinlagen bildenden Profilelemente 36, 38 bzw. 40, 42 ist dabei derart gewählt, dass die Profilelemente 36, 38, 40, 42 seitlich entlang der Aussparung 22 verlaufen.

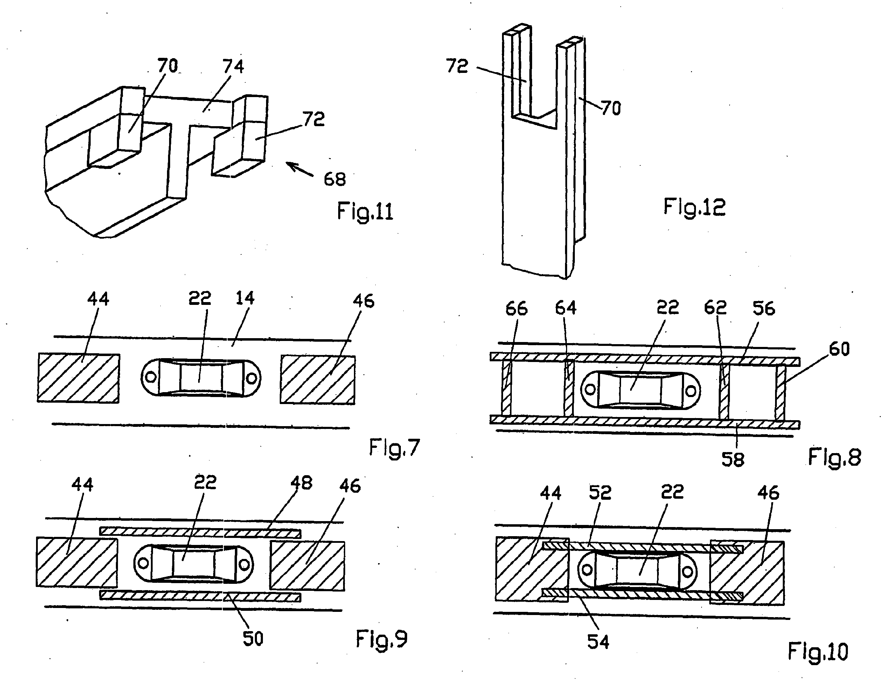

Erstreckt sich die Verstärkungseinlage mit einem Profil entsprechend der Fig. 2, 5 und 6 weitgehend über die Breite des Flansches 14, so sind Maßnahmen zu treffen, dass die Aussparung 2 nicht verschlossen wird. Diesbezügliche konstruktive Möglichkeiten sind den Fig. 7 bis 10 zu entnehmen. So kann eine Verstärkungsleiste aus zwei Abschnitten 44, 46 bestehen, die sich vor und hinter der Aussparung 22 in Längsrichtung des Wasserwaagenkörpers 10 betrachtet erstrecken. Die Abschnitte 44, 46 können dabei jeweils eine Profilgeometrie aufweisen, wie diese insbesondere den Fig. 2, 5 und 6 entsprechen.

Um im Bereich der Aussparung 22 gleichfalls eine gewünschte Stabilität des Wasserwaagenkörpers 10 sicherzustellen, können nach dem Ausführungsbeispiel der Fig. 9 seitlich entlang der Aussparung 22 leistenförmige Elemente 48, 50 verlaufen, die entsprechend der Draufsicht gemäß Fig. 9 randseitig die Abschnitte 44, 46 der Verstärkungseinlage überlappen.

Sind nach dem Ausführungsbeispiel der Fig. 9 die leistenförmigen Elemente 48, 50 und die Abschnitte 44, 46, die zusammen die Verstärkungsleiste an sich bilden, beabstandet zueinander angeordnet, so besteht nach dem Ausführungsbeispiel der Fig. 10 auch die Möglichkeit, die Abschnitte 44, 46 sowie entlang der Aussparung 22 verlaufende leistenförmige Elemente 52, 54 miteinander zu verbinden wie zu verschweißen. Durch diese Maßnahmen ist ein einfaches Umspritzen möglich.

Nach dem Ausführungsbeispiel der Fig. 8 erstrecken sich entlang des Flansches 14 stabförmige Verstärkungsleisten 56, 58, die denen der Fig. 3 und 4 entsprechen können, wobei zumindest im Bereich der Aussparung 22 Querverstrebungen 60, 62, 64, 66 vorhanden sind, die die Verstärkungsleisten 56, 58 miteinander verbinden. Hierdurch ist eine hohe Maßhaltigkeit beim Spritzen gewährleistet mit der Folge, dass der Wasserwaagenkörper 10 eine hohe Maßgenauigkeit aufweist.

Den Fig. 11 und 12 sind im Ausschnitt und in perspektivischer Darstellung ein Abschnitt einer weiteren Ausführungsform einer Verstärkungsleiste 68 zu entnehmen, die eine T-Profilgeometrie aufweist. Im Bereich der Aussparung 22 ist die Verstärkungsleiste unterbrochen. Die vor und hinter der Aussparung 22 verlaufenden Abschnitte, die denen der Fig. 7 vom Verlauf prinzipiell entsprechen, sind sodann über Stäbe oder Leisten 70, 72 verbunden, die mit den Seitenrändern oder mit den Unterseiten des Querschenkels 74 verbunden wie verschweißt sind, wie sich aus den Fig. 11 und 12 ergibt.

In der Fig. 13 ist ein Schnitt entlang der Linie XIII-XIII einer den Wasserwaagenkörper 10 aufweisenden Wasserwaage dargestellt, also im Bereich der Aussparung 22, durch die eine Libelle 37 sichtbar ist.

Wie die Schnittdarstellung verdeutlicht, verlaufen senkrecht zu den Flanschflächen 17, 23 die Abschnitte 34, 35 der Verstärkungseinlage 32, die die Abschnitte 29, 31 verbinden. In der Schnittdarstellung der Fig. 13 ist des Weiteren im Bereich des unteren Flansches 16 eine entsprechende Verstärkungseinlage eingezeichnet.

Der Wasserwaagenkörper 10 besteht vorzugsweise aus einem Langfasern wie Glasoder Kohlenstofffasern enthaltenden thermoplastischen Material. Als bevorzugte Materialien für die Verstärkungseinlagen sind kohlenstofffaserverstärkter Kunststoff oder glasfaserverstärkter Kunststoff zu nennen, wobei die Nebenbedingung erfüllt sein sollte, dass das Elastizitätsmodul (E-Modul) erheblich größer als das von Aluminium ist.

Des Weiteren ist darauf hinzuweisen, dass es nicht zwingend erforderlich ist, dass die Verstärkungseinlage in jedem Flansch des Wasserwaagenkörpers 10 verläuft, also in diesem Bereich umspritzt ist, gleichwenn dies als bevorzugt anzugeben ist.

Eine hinreichende Maßgenauigkeit ergibt sich bereits dann, wenn nur in einem der Flansche eine Verstärkungseinlage umspritzt ist, wobei bevorzugterweise derjenige zu wählen ist, in der die Libelle eingesetzt ist.

Ferner ist die erfindungsgemäße Lehre nicht auf Wasserwaagenkörper beschränkt, die die Geometrie eines I-Profils aufweisen. Kunststoffwasserwaagen anderen Profils können gleichfalls entsprechend der Erfindung Verstärkungseinlagen aufweisen, die jedoch erwähntermaßen über die gesamte oder nahezu gesamte Länge des Wasserwaagenkörpers sich erstrecken und von dem Kunststoffmaterial umspritzt sein sollten.

Die erfindungsgemäße Lehre ist für Wasserwaagen einer Länge zwischen 600 mm und 2000 mm besonders geeignet. Eine bevorzugte Länge ist 1200 mm.

## Patentansprüche

1. Wasserwaage umfassend einen durch Spritzgießen thermoplastischen Materials hergestellten Wasserwaagenkörper (10) mit zumindest einer Aussparung (22) für einen Lagesensor wie Libelle (37) sowie einer von dem thermoplastischen Material zumindest bereichsweise umspritzten Verstärkungseinlage (29, 31, 32, 33, 34, 35, 36, 38, 39, 40, 41, 42, 44, 46, 48, 50, 52, 54, 56, 58, 60, 62, 64, 66, 68), die aus faserverstärktem Kunststoff besteht und zumindest bereichsweise stoffschlüssig mit dem Wasserwaagenkörper verbunden ist.

2. Wasserwaage nach Anspruch 1,
**dadurch gekennzeichnet,**
**dass** die Verstärkungseinlage (29, 31, 32, 33, 34, 35, 36, 38, 39, 40, 41, 42, 44, 46, 48, 50, 52, 54, 56, 58, 60, 62, 64, 66, 68) aus einem kohlenstoff- oder glasfaserverstärkten Kunststoff, insbesondere einem Kunststoff mit Fasern wie Rovings oder textilen Halbzeugen besteht, die sich als Einheit über die gesamte oder nahezu gesamte Länge der Verstärkungseinlage erstrecken.

3. Wasserwaage nach Anspruch 1 oder 2,
**dadurch gekennzeichnet,**
**dass** sich die Verstärkungseinlage (29, 31, 32, 33, 34, 35, 36, 38, 39, 40, 41, 42, 44, 46, 48, 50, 52, 54, 56, 58, 60, 62, 64, 66, 68) entlang Längsachse des Wasserwaagenkörpers (10), und über dessen gesamte oder nahezu gesamte Länge und insbesondere entlang oberem und/oder unterem Längsrandbereich erstreckt, der außenseitig von Messsohle (17) des Wasserwaagenkörpers (10) begrenzt ist.

4. Wasserwaage nach Anspruch 1,
**dadurch gekennzeichnet,**
**dass** der Wasserwaagenkörper (10) aus einem faserverstärkten wie kurz- oder langfaserverstärktem Kunststoff besteht, wobei vorzugsweise der Kunststoff des Wasserwaagenkörpers dem Kunststoff der Verstärkungseinlage (29, 31, 32, 33, 34, 35, 36, 38, 39, 40, 41, 42, 44, 46, 48, 50, 52, 54, 56, 58, 60, 62, 64, 66, 68) entspricht.

5. Wasserwaage nach zumindest einem der vorhergehenden Ansprüche,
**dadurch gekennzeichnet,**
**dass** in Längsachsenrichtung des Wasserwaagenkörpers (10) betrachtet vor und hinter der insbesondere von der der Messsohle gegenüberliegenden Fläche ausgehenden Aussparung (22) eine erste und eine zweite Verstärkungseinlage (44, 46) oder Abschnitte einer Verstärkungseinlage verlaufen.

6. Wasserwaage nach zumindest einem der vorhergehenden Ansprüche,
**dadurch gekennzeichnet,**
**dass** ober- und/oder unterhalb und zu beiden Seiten der Aussparung (22) dritte und vierte Verstärkungseinlagen (48, 50) in dem Wasserwaagenkörper (10) verlaufen.

7. Wasserwaage nach zumindest einem der vorhergehenden Ansprüche,
**dadurch gekennzeichnet,**
**dass** die erste bzw. die zweite Verstärkungseinlage (44, 46) mit der dritten bzw. vierten Verstärkungseinlage (48, 50) verbunden wie verschweißt ist.

8. Wasserwaage nach zumindest einem der vorhergehenden Ansprüche,
**dadurch gekennzeichnet,**
**dass** die dritte bzw. vierte jeweils seitlich entlang der Aussparung (22) verlaufende Verstärkungsleiste zumindest abschnittsweise in Längsrichtung des Wasserwaagenkörpers (10) die erste und zweite Verstärkungsleiste (44, 46) überlappen.

9. Wasserwaage nach zumindest einem der vorhergehenden Ansprüche,
**dadurch gekennzeichnet,**
**dass** die Verstärkungsleiste zwei in Längsachsenrichtung und seitlich entlang jeder Seite der Aussparung (22) verlaufende erste Abschnitte (56, 58) aufweist, die mit quer zu diesen verlaufenden zweiten Abschnitten (60, 62, 64, 66) verbunden sind.

10. Wasserwaage nach zumindest einem der vorhergehenden Ansprüche,
**dadurch gekennzeichnet,**
**dass** der Wasserwaagenkörper (10) eine Geometrie eines I-Profils mit oberem und unterem Flansch (14, 16) und die Flansche verbindendem Steg (12) aufweist und dass zumindest in einem Flansch eine Verstärkungseinlage (32) verläuft.

11. Wasserwaage nach zumindest einem der vorhergehenden Ansprüche,
**dadurch gekennzeichnet,**
**dass** in Längsrichtung des Wasserwaagenkörpers (10) betrachtet vor und hinter der von gegenüber der Messsohle (17) verlaufenden Außenfläche (23) der Schmalseite des Wasserwaagenkörpers ausgehenden Aussparung (22) für den Lagesensor jeweils eine erste Verstärkungseinlage (68) vorzugsweise in Form eines T-Profils in den Wasserwaagenkörper eingespritzt ist und dass die ersten Verstärkungseinlagen zumindest mit einer seitlich der Aussparung und/oder unterhalb der Aussparung verlaufenden zweiten Verstärkungseinlage (70, 72) verbunden sind.

12. Wasserwaage nach zumindest Anspruch 11,
**dadurch gekennzeichnet,**
**dass** die zweite Verstärkungseinlage unterhalb der in Richtung der Außenfläche (23) versetzt angeordneten und in der Ausnehmung (22) eingesetzten Libelle verläuft.

13. Wasserwaage nach zumindest einem der vorhergehenden Ansprüche,
**dadurch gekennzeichnet,**
**dass** die Verstärkungseinlage (29, 31, 32, 33, 34, 35, 36, 38, 39, 40, 41, 42, 44, 46, 48, 50, 52, 54, 56, 58, 60, 62, 64, 66, 68) ein E-Modul mit E » 80 GPa, insbesondere E > 200 GPa, vorzugsweise E > 400 GPa aufweist.

14. Wasserwaage nach zumindest Anspruch 11,
**dadurch gekennzeichnet,**
**dass** der die Flansche (14, 16) verbindende Steg (12) im Schnitt entlang der Flansche eine wellenförmige Geometrie aufweist.

15. Wasserwaage nach zumindest Anspruch 11,
**dadurch gekennzeichnet,**
**dass** die Verstärkungseinlage (29, 31, 32, 33, 34, 35, 36, 38, 39, 40, 41, 42, 44, 46, 48, 50, 52, 54, 56, 58, 60, 62, 64, 66, 68) und der Wasserwaagenkörper (10) die gleiche Matrix insbesondere aus Polyamid bestehend oder enthaltend aufweist.

16. Wasserwaage nach zumindest Anspruch 11,
**dadurch gekennzeichnet,**
**dass** die Wasserwaage in Bezug auf die Anordnung der Verstärkungseinlagen (29, 31, 32, 33, 34, 35, 36, 38, 39, 40, 41, 42, 44, 46, 48, 50, 52, 54, 56, 58, 60, 62, 64, 66, 68) symmetrisch aufgebaut ist.

## Claims

1. A level comprising a level body (10) produced by injection molding thermoplastic material, which body has at least one recess (22) for a position sensor, such as a bubble level (37), as well as a reinforcing insert (29, 31, 32, 33, 34, 35, 36, 38, 39, 40, 41, 42, 44, 46, 48, 50, 52, 54, 56, 58, 60, 62, 64, 66, 68), which is overmolded at least in areas with thermoplastic material, is made of fiber-reinforced plastic and is materially connected with the level body at least in some areas.

2. A level according to Claim 1,
**characterized in**
**that** the reinforcing insert (29, 31, 32, 33, 34, 35, 36, 38, 39, 40, 41, 42, 44, 46, 48, 50, 52, 54, 56, 58, 60, 62, 64, 66, 68) is made of a carbon fiber or glass fiber reinforced plastic, particularly a plastic with fibers, such as rovings or textile semifinished products, which extend as a unit across the entire or substantially the entire length of the reinforcing insert.

3. A level according to Claim 1 or 2,
**characterized in**
**that** the reinforcing insert (29, 31, 32, 33, 34, 35, 36, 38, 39, 40, 41, 42, 44, 46, 48, 50, 52, 54, 56, 58, 60, 62, 64, 66, 68) extends along the longitudinal axis of the level body (10) and across its entire or substantially entire length and particularly along the upper and/or lower longitudinal edge area, which is defined on the exterior side by the measurement base (17) of the level body (10).

4. A level according to Claim 1,
**characterized in**
**that** the level body (10) is made of a fiber-reinforced, such as a short or long fiber-reinforced plastic, the plastic of the level body preferably matching the plastic of the reinforcing insert (29, 31, 32, 33, 34, 35, 36, 38, 39, 40, 41, 42, 44, 46, 48, 50, 52, 54, 56, 58, 60, 62, 64, 66, 68).

5. A level according to at least one of the preceding claims,
**characterized in**
**that** a first and a second reinforcing insert (44, 46) or sections of a reinforcing insert extend in the longitudinal axis direction of the level body (10), when viewed in front of and behind the recess (22) starting especially in the area opposite the measurement base.

6. A level according to at least one of the preceding claims,
**characterized in**
**that** third and fourth reinforcing inserts (48, 50) extend above and/or below and on both sides of the recess (22) in the level body (10).

7. A level according to at least one of the preceding claims,
**characterized in**
**that** the first and the second reinforcing insert (44, 46), respectively, is connected, such as welded, to the third and the fourth reinforcing insert (48, 50) respectively.

8. A level according to at least one of the preceding claims,
**characterized in**
**that** the third and the fourth reinforcing strip, respectively, each extending laterally along the recess (22), overlap at least in sections the first and second reinforcing strip (44, 46) in the longitudinal direction of the level body (10).

9. A level according to at least one of the preceding claims,
**characterized in**
**that** the reinforcing strip has two first sections (56, 58) extending in the longitudinal axis direction and laterally along each side of the recess (22), which sections are connected to the second sections (60, 62, 64, 66) extending in a transverse manner to them.

10. A level according to at least one of the preceding claims,
**characterized in**
**that** the level body (10) has the geometry of an I-profile with upper and lower flanges (14, 16) and a rib (12) connecting the flanges and that a reinforcing insert (32) extends in at least one flange.

11. A level according to at least one of the preceding claims,
**characterized in**
**that** a first reinforcing insert (68), preferably in the form of a T-profile, is molded in the level body in the longitudinal direction of the level body (10) when viewed in front of and behind the recess (22) for the position sensor extending from the exterior area (23) of the narrow side of the level body opposite the measurement base (17), and that the first reinforcing inserts are connected to at least a second reinforcing insert (70, 72) extending to the side of the recess and/or below the recess.

12. A level according to at least Claim 11,
**characterized in**
**that** the second reinforcing insert extending beneath the level bubble that is positioned in an offset manner in the direction of the exterior area (23) and is also placed in the recess (22).

13. A level according to at least one of the preceding claims,
**characterized in**
**that** the reinforcing insert (29, 31, 32, 33, 34, 35, 36, 38, 39, 40, 41, 42, 44, 46, 48, 50, 52, 54, 56, 58, 60, 62, 64, 66, 68) has an E-module with E >> 80 GPa, in particular E > 200 GPa, preferably E > 400 GPa.

14. A level according at least to Claim 11,
**characterized in**
**that** in cross section the rib (12) connecting the flanges (14, 16) has a wave-shaped geometry along its flanges.

15. A level according to at least Claim 11,
**characterized in**
**that** the reinforcing insert (29, 31, 32, 33, 34, 35, 36, 38, 39, 40, 41, 42, 44, 46, 48, 50, 52, 54, 56, 58, 60, 62, 64, 66, 68) and the level body (10) have the same matrix, particularly being made of or comprising polyamide.

16. A level according to at least Claim 11,
**characterized in**
**that** the level is constructed in a symmetrical manner with regard to the arrangement of the reinforcing inserts (29, 31, 32, 33, 34, 35, 36, 38, 39, 40, 41, 42, 44, 46, 48, 50, 52, 54, 56, 58, 60, 62, 64, 66, 68).

## Revendications

1. Niveau à bulle comprenant un corps de niveau à bulle (10) fabriqué par injection d'une matière thermoplastique, ayant au moins une cavité (22) pour un capteur de position tel qu'une nivelle, ainsi qu'un insert de renforcement enrobé par injection au moins par zone avec de la matière thermoplastique (29, 31, 32, 33, 34, 35, 36, 38, 39, 40, 41, 42, 44, 46, 48, 50, 52, 54, 56, 58, 60, 62, 64, 66, 68), cet insert de renforcement étant en matière plastique renforcée par des fibres et il est relié au moins par zone par une liaison par la matière au corps du niveau à bulles.

2. Niveau à bulle selon la revendication 1,
**caractérisé en ce que**
l'insert de renforcement (29, 31, 32, 33, 34, 35, 36, 38, 39, 40, 41, 42, 44, 46, 48, 50, 52, 54, 56, 58, 60, 62, 64, 66, 68) est en une matière plastique renforcée par des fibres de carbone ou des fibres de verre notamment une matière plastique avec des fibres telle que des mèches ou de produits textiles semi-finis, et s'étendant sous la forme d'un ensemble sur toute la longueur de l'insert de renforcement ou pratiquement toute sa longueur.

3. Niveau à bulle selon la revendication 1 ou 2,
**caractérisé en ce que**
l'insert de renforcement (29, 31, 32, 33, 34, 35, 36, 38, 39, 40, 41, 42, 44, 46, 48, 50, 52, 54, 56, 58, 60, 62, 64, 66, 68), s'étend suivant l'axe longitudinal du corps de niveau à bulle (10) et sur toute sa longueur ou pratiquement toute sa longueur et notamment le long de la zone de bord longitudinale supérieure et/ou inférieure, délimitée côté extérieur par la semelle de mesure (17) du corps (10) du niveau à bulle.

4. Niveau à bulle selon la revendication 1,
**caractérisé en ce que**
le corps de niveau à bulle (10) est en une matière plastique renforcée par des fibres telle qu'une matière plastique renforcée par des fibres courtes ou des fibres longues et de préférence, la matière plastique du corps de niveau à bulle correspond à la matière plastique de l'insert de renforcement (29, 31, 32, 33, 34, 35, 36, 38, 39, 40, 41, 42, 44, 46, 48, 50, 52, 54, 56, 58, 60, 62, 64, 66, 68).

5. Niveau à bulle selon l'une des revendications précédentes,
**caractérisé en ce que**
dans la direction longitudinale du corps de niveau à bulle (10), en amont et en aval de la cavité (22) réalisée notamment dans la surface opposée à la cellule de mesure, on a un premier et un second insert de renforcement (44, 46) ou des segments d'un insert de renforcement.

6. Niveau à bulle selon l'une des revendications précédentes,
**caractérisé en ce qu'**
au-dessus et/ou en dessous et des deux côtés de la cavité (22), il y a des troisième et quatrième inserts de renforcement (48, 50) dans le corps (10) du niveau à bulle.

7. Niveau à bulle selon l'une des revendications précédentes,
**caractérisé en ce que**
le premier et le second insert de renforcement (44, 46) sont reliés par exemple soudés au troisième et au quatrième insert de renforcement (48, 50).

8. Niveau à bulle selon l'une des revendications précédentes,
**caractérisé en ce que**
le troisième insert de renforcement ou le quatrième insert de renforcement se situant chaque fois latéralement le long de la cavité (22), se chevauchent au moins partiellement dans la direction longitudinale du corps (10) de niveau à bulle pour le premier et le second insert de renforcement (44, 46).

9. Niveau à bulle selon l'une des revendications précédentes,
**caractérisé en ce que**
la nervure de renforcement comporte deux premiers segments (56, 58) dirigés dans la direction de l'axe longitudinal et passant latéralement le long des côtés de la cavité (22), ces segments étant reliés à des seconds segments (60, 62, 64, 70) transversaux aux premiers segments.

10. Niveau à bulle selon l'une des revendications précédentes,
**caractérisé en ce que**
le corps de niveau à bulle (10) a la géométrie d'un profil en I avec une aile supérieure, une aile inférieure (14, 16) et une âme (12) reliant les ailes, et au moins dans une bride, un insert de renforcement (32).

11. Niveau à bulle selon l'une des revendications précédentes,
**caractérisé en ce que**
dans la direction longitudinale du corps (10), en amont et en aval de la cavité (22) partant de la surface extérieure (23) du côté étroit du corps de niveau à bulle, à l'opposé de la semelle de mesure (17), pour le capteur de position, on a chaque fois un premier insert de renforcement (68) de préférence sous la forme d'un profil en T, injecté dans le corps du niveau à bulle et **en ce que** les premiers inserts de renforcement sont reliés à au moins un second insert de renforcement (70, 72) passant latéralement à côté de la cavité et/ou en dessous de la cavité.

12. Niveau à bulle selon la revendication 11,
**caractérisé en ce que**
le second insert de renforcement est décalé en dessous de la nivelle, décalée dans la direction de la surface extérieure (23) et installée dans la cavité (22).

13. Niveau à bulle selon l'une des revendications précédentes,
**caractérisé en ce que**
l'insert de renforcement (29, 31, 32, 33, 34, 35, 36, 38, 39, 40, 41, 42, 44, 46, 48, 50, 52, 54, 56, 58, 60, 62, 64, 66, 68) a un module d'élasticité E tel que E >> 80 GPa, notamment E > 200 GPa et de préférence E > 400 GPa.

14. Niveau à bulle selon la revendication 11,
**caractérisé en ce que**
l'entretoise (12) qui relie la bride (14, 16) a une géométrie ondulée en coupe le long de la bride.

15. Niveau à bulle selon la revendication 11,
**caractérisé en ce que**
l'insert de renforcement (29, 31, 32, 33, 34, 35, 36, 38, 39, 40, 41, 42, 44, 46, 48, 50, 52, 54, 56, 58, 60, 62, 64, 66, 68) et le corps de niveau à bulle (10) sont formés de la même matière notamment en polyamide ou ils contiennent cette matière.

16. Niveau à bulle selon la revendication 11,
**caractérisé en ce que**
le niveau à bulle est symétrique par rapport à la disposition des inserts de renforcement (29, 31, 32, 33, 34, 35, 36, 38, 39, 40, 41, 42, 44, 46, 48, 50, 52, 54, 56, 58, 60, 62, 64, 66, 68).
